Europäisches Patentamt

European Patent Office

Office européen des brevets

(19)

(11) Veröffentlichungsnummer: **0 114 168**
**B1**

(12) **EUROPÄISCHE PATENTSCHRIFT**

(45) Veröffentlichungstag der Patentschrift: **29.07.87**

(21) Anmeldenummer: **83100536.8**

(22) Anmeldetag: **21.01.83**

(51) Int. Cl.⁴: **C 03 B 23/03,** C 03 B 23/033,
C 03 B 27/04

(54) Vorrichtung zum Wölben von Glasscheiben.

(43) Veröffentlichungstag der Anmeldung:
**01.08.84 Patentblatt 84/31**

(45) Bekanntmachung des Hinweises auf die
Patenterteilung:
**29.07.87 Patentblatt 87/31**

(84) Benannte Vertragsstaaten:
**AT BE CH FR GB IT LI LU NL SE**

(56) Entgegenhaltungen:
**DE-B-1 190 135**
**DE-C-3 150 859**
**FR-A-1 163 547**
**FR-A-2 118 855**
**FR-A-2 144 523**
**GB-A-2 068 358**
**GB-A-2 094 290**
**US-A-2 298 709**
**US-A-3 701 644**
**US-A-3 856 499**
**US-A-4 139 359**
**US-A-4 218 232**
**US-A-4 252 552**

(73) Patentinhaber: **Dicks, Karl-Heinz, Dipl.-Ing.**
**Stüttgesgasse 6a**
**D-5107 Lammersdorf (DE)**
(73) Patentinhaber: **Kramer, Carl, Prof.Dr.-Ing.**
**Am Chorusberg 8**
**D-5100 Aachen (DE)**

(72) Erfinder: **Dicks, Karl-Heinz, Dipl.-Ing.**
**Stüttgesgasse 6a**
**D-5107 Lammersdorf (DE)**
Erfinder: **Kramer, Carl, Prof.Dr.-Ing.**
**Am Chorusberg 8**
**D-5100 Aachen (DE)**

(74) Vertreter: **Marx, Lothar, Dr.**
**Patentanwälte Schwabe, Sandmair, Marx**
**Stuntzstrasse 16 Postfach 86 02 45**
**D-8000 München 80 (DE)**

Courier Press, Leamington Spa, England.

**Beschreibung**

Die Erfindung betrifft eine Vorrichtung zum Wölben von auf die Erweichungstemperatur erwärmten Glasscheiben der im Oberbegriff des Anspruchs 1 angegebenen Gattung.

Aus der DE—P—1 679 961 und der DE—PS—2 331 584 sind Vorrichtungen zum Wölben von auf die Erweichungstemperatur erwärmten Glasscheiben bekannt, wobei in der Oberflächenebene der Wölbeform gebogene Stäbe verwendet werden; jeder Stab kann um eine durch seine beiden Enden verlaufende Achse gedreht werden, so daß sich eine der Form der Stäbe entsprechende Verformung der plastischen Glasscheibe ergibt. Die Beigekraft wird durch Andrücken der Glasscheibe an eine Gegenform oder an Gegenrollen erzielt, die ähnlich wie die Formstäbe geformt sind. Nachteilig bei diesen Vorrichtungen sind die Probleme in bezug auf die Einhaltung einer exakten Biegelinie. Beim Transport der planen Glasscheibe in der horizontalen Transporteben auf den gebogenen, jedoch in eine horizontale Transportebene geschwenkten Formstäben treten nämlich bei Glasscheiben, die nicht symmetrisch zur Transportachse sind, unterschiedliche Seitenkräfte auf den beiden Seiten der Längsachse auf. Dadurch kommt es leicht zu einem seitlichen Verlaufen der Scheibe, wodurch der Winkel zwischen der gewünschten Biegeachse und der effektiven Biegeachse, die mit der Transportrichtung übereinstimmt, von Null abweichen kann.

Ein weiterer Nachteil wird darin gesehen, daß beim Herausschwenken der gebogenen Formstäbe nach oben die Glasscheibe keine stabile Lage mehr hat, weil sie nur im Mittenbereich geführt ist. Weitere Probleme, die insbesondere bei dünnen Glasscheiben die optische Qualität mindern, sind noch auf die flächenhaften Kontaktbereiche, die durch den verstärkten Wärmeaustausch zu einer lokal unterschiedlichen stärkeren Abkühlung der Glasscheibe führen, sowie bei Verwendung von Gegenrollen als Biegeform auf den Gegenwalseneffekt zurückzuführen, der insbesondere bei dünnen und wenig biegesteifen Glasscheiben Querwellen erzeugt und die Fabrikation optisch einwandfreier gewölbter Glasscheiben erschwert.

Bei der Vorrichtung nach der DE—AS—2 621 902 läuft die Glasscheibe auf nach oben konvex gebogenen Formstäben, deren Stichmaß der Biegelinie in Durchlaufrichtung zunimmt. Die Form der durch Erwärmung erweichten Scheibe paßt sich dabei infolge der Schwerkraft der gewölbten Form der Stäbe an. Ein wesentlicher Nachteil dieser Vorrichtung liegt ebenfalls darin, daß die Biegelinie nicht exakt fixiert ist. Die Ungenauigkeiten bei der Einhaltung der gewünschten Wölbung sind jedoch umso größer, je unregelmäßiger die Glasscheibe geformt ist. Soergeben sich beispielsweise bei spitz zulaufenden Glasscheiben kaum überwindliche Schwierigkeiten, da die unterschiedlich geformten Teilflächen zu beiden Seiten der Biegeachse eine unterschiedliche Schwerkraftwirkung erfahren und damit der gesamte Biegevorgang unterschiedlich verläft.

Aus der US—PS—3 856 499 geht eine Vorrichtung zum Wölben von Glasscheiben mit zwei in vertikaler Richtung übereinander angeordneten Sätzen von Form-Rollen mit konkaver bzw. konvexer Oberfläche auf; die beiden Sätze von Rollen können relativ zueinander verschoben werden, so daß die zwischen die Rollen eingeführte Glasscheibe entsprechend den zueinander komplementären Oberflächen-Formen der Rollen verformt wird. Die Glasscheibe wird durch Transportrollen zwischen die Formrollen eingeführt, welche Transportrollen im Vervormungsbereich zwischen der oberen Transportstellung und der unteren Vervormungssellung beweglich sind. Die Relativbewegung zwischen den Sätzen von Rollen und damit die Erzeugung des entsprechenden Verformungsmomentes wird beendet, wenn die Rollen eine Lage erreichen, in der sie nur durch einen vorgegebenen Abstand voneinander getrennt sind, der etwas größer als die Diche der Glasscheibe ist. Anschließend wird die verformte Glasscheibe zwischen den Sätzen von Rollen weiter transportiert.

Aus der US—PS—3 701 644 geht eine ähnliche Vorrichtung hervor, wobei die erwärmte Glasscheibe jedoch nur um eine einzige Achse oder um zwei zueinander senkrechte Achsen gebogen werden kann. Die Krümmungsradien der Wölbungen ändern sich dadurch auf der Transportstrecke der Glasscheibe.

Eine Vorrichtung zum Wölben von auf die Erweichungstemperatur erwärmten Glasscheiben der angegebenen Gattung ist schließlich noch aus der DE—PS—2 532 318 bekannt; dabei werden die Formstäbe durch einen Kern und eine drehbare, angetriebene Außenhülle, bspw. eine Hülse, gebildet; zum Antransport der noch planen Glasscheibe werden die gewölbten Formstäbe in eine horizontale Lage geschwenkt, so daß sich eine horizontale Transportebene bildet; zur Einleitung des Biegevorganges werden die gewölbte Formstäbe nach unten geschwenkt. Die eigentliche Wölbung wird durch Anheben des gesamten Systems mit den Formstäben nach oben und Andrücken gegen eine Gegenform erreicht. Der wesentliche Vorteil dieser Vorrichtung liegt in der genaueren Positionierung der Scheibe; nachteilig ist jedoch, daß die Glasscheibe während des eigentlichen Biegevorgangs angehalten werden muß, also der kontinuierliche Durchlauf nich möglich ist. Außerdem tritt bei dieser Vorrichtung der bereits oben erwähnten Nachteile auf, daß nämlich die noch plane Glasscheibe auf den gewölbten Formstäben, die in eine horizontale Ebene geschwenkt worden sind, transportiert werden muß, bei diesem Transport jedoch schwer kontrollierbare Seitenbewegungen auftreten.

Der Erfindung liegt deshalb die Aufgabe zugrunde, eine Vorrichtung zum Wölben von auf die Erweichungstemperatur erwärmten Glasscheiben der angegebenen Gattung zu schaffen, die einerseits die Führung der noch planen Glasscheibe und andererseits die gleichmäßige Wölbung auch extrem dünner Glasscheiben ohne optische Fehler gewährleistet.

Dies wird erfindungsgemäß durch die im kennzeichnenden Teil des Anspruchs 1 angegebenen Merkmale erreicht.

Zweckmäßige Ausführungsformen sind in den Unteransprüchen zusammengestellt.

Die mit der Erdinfung erzielten Vorteile beruhen auf folgender Funktionsweise:

Die von dem Ofen kommenden, auf die Erweichungstemperatur erwärmten, also plastisch verformbaren, jedoch noch planen Glasscheiben werden durch mehrere gerade Transportstäbe in den eigentlichen Verformungsbereich transportiert; in diesem Verformungsbereich sind zwischen den einzelnen Transportstäben stationäre, senkrecht nach unten gewölbte Formstäbe angeordnet. Wenn die Scheibe nun im Verlaufe ihrer Transportbewegung den Verformbereich erreicht, wird zunächst eine Anpreßvorrichtung, die durch eine Andruckrolle mit z.B. einem Andruckzylinder gebildet werden kann, von oben auf die Oberfläche der Scheibe abgesenkt. Diese Andruckrolle befindet sich exakt senkrecht über einer geraden Transportrolle, so daß kein Biegemoment entstehen kann, das zu einer Querwellenverformung von empfindlichen Glasscheiben führen könnte.

Zeitlich abgestimmt mit dieser Bewegung der Anpreßvorrichtung nach unten werden auch die geraden Transportstäbe entsprechend nach unten bewegt; dies kann beispielsweise dadurch erfolgen, daß im Zeitpunkt des Aufsetzens der Anpreßrolle auf die Oberfläche der Scheibe die Bewegung der Transportstäbe nach unten beginnt. Die Transportstäbe werden nach unten in eine Verformungsstellung gebracht, die wiederum der Lage von stationären, senkrecht nach unten gewölbten Formstäben entspricht. Dadurch ergibt sich die Verformung der plastischen Glasscheibe in die gewünschte, gewölbte Form.

Während dieses gesamten Ablaufs wird die Glasscheibe weiter transportiert, wobei jede Relativbewegung zwischen den Außenhüllen der Stäbe und der Glasscheibe dadurch vermieden wird, daß die gewölbten Formstäbe exakt senkrecht nach unten gerichtet sind. Dadurch müssen zwar die Wölbungen der Formstäbe jeweils der Scheibenform angepaßt werden; es ergibt sich jedoch der im Hinblick auf die optische Qualität der gewölbten Glasscheibe sehr wesentliche Vorteil, daß keine Relativbewegung auftritt, die zu geringen zusätzliche, jedoch optisch wahrnehmbaren Verzerrungen führen würde.

Um das Austauschen der gewölbten Formstäbe entsprechend der angestreben Wölbungsform der Glasscheiben zu erleichtern, sind die Formstäbe auf einem getrennten Gestell montiert, das leicht seitlich durch Herausfahren auf Schienen ausgewechselt werden kann.

Im allgemeinen wird die Andruckrolle frei drehbar sein, also bei der Berührung mit der Glasscheibe von dieser mitgenommen; bei extrem dünnen und empfindlichen Glasscheiben kann es jedoch zweckmäßig sein, die Andruckrolle entsprechend der Transportgeschwindigkeit der Glasscheiben anzutreiben, um auch hier jede Relativbewegung zu vermeiden.

Die Durchführung des Beigevorgangs ohne Änderung der Transportgeschwindigkeit der Glasscheibe hat den Vorteil, daß sich die Glasscheibe nur sehr kurze Zeit im eigentlichen Verformungsbereich aufhält und deshalb nur in geringem Maße Wärme abgeben kann, also die Glasscheibe noch nahezu mit der gleichen Temperatur, die sie beim Austritt aus dem dem Verformungsbereich vorgeschalteten Ofen hat, in die nachgeschaltete Vorspannzone eintritt.

Weiterhin berührt die von oben auf die Scheibe abgesenkte Andruckrolle die Scheibe nur in einem sehr kleinen Flächenbereich, so daß sich nur ein sehr geringer Wärmeaustausch mit der heißen Scheibenoberfläche ergibt. Auch dies trägt dazu bei, die Glasscheibe auf der gewünschten hohen Temperatur zu halten.

Nachdem die gewölbte Glasscheibe von den gewölbten Formstäben aus dem Verformungsbereich heraus transportiert worden ist, werden die geraden Transportrollen im Verformungsbereich, beispielsweise unter der Wirkung von Preßluftzylindern, in sehr kurzer Zeit nach oben in die Transportstellung gebracht, so daß nun eine neue Glasscheibe in den Verformungsbereich einlaufen kann.

Die Verwendung von praktisch stationären gewölbten Formstäben bietet den Vorteil, daß keine Justierung der einzelnen Formstäbe erforderlich ist, sondern nur ein gesamter Satz von Formstäben in Anpassung an eine Änderung der Wölbung der Glasscheibe ausgetauscht werden muß. Bei den bekannten Vorrichtungen, bei denen die Formstäbe einzeln verschwenkt werden mußten, waren aufwendige Justierungen erforderlich, die jedoch im allgemeinen nicht mit der gewünschten Exaktheit durchgeführt werden konnten, so daß es immer wieder zu wellenförmigen Verformungen der gewölbten Glasscheibe kam. Dies wird durch die hier beschriebene, einfache Konstruktion vermieden.

Zweckmäßigerweise ist die Transportgeschwindigkeit der planen Glasscheibe beim Verlassen des Ofens größer als im Ofen selbst, so daß diese Glasscheibe mit relativ hoher Geschwindigkeit durch den Verformungsbereich geführt wird und deshalb auch bei Verwendung von relativ wenigen gewölbten Formstäben weniger Zeit für das "Einsinken" der plastischen Glasscheibe in die Zwischenräume zwischen den Formstäben zur Verfügung steht. Auch dadurch wird eine wellenförmige Struktur der Oberfläche der gewölbten Glasscheibe vermieden.

Wesentlichen für die Herstellung qualitativ hochwertiger, gebogener, vorgespannter Glasscheiben ist die Ausgestaltung der dem Verformungsbereich nachgeschalteten Vorspannstrecke, in der überlicherweise die gewölbte Glasscheibe durch Beblasen mittels eines Gasstrahls, im allgemeinen eines Luftstrahls, ausreichend schnell abgekühlt wird. Aus der DE—A— 2 213 670 ist eine Vorspannstrecke bekannt, bei der die Glasscheibe von oben und von unten durch Transportstäbe geführt wird. Diese Transportstäbe stören jedoch die Strömung des Gasstrahls an der Ober- bzw. Unterseite der Scheibe, insbesondere die Anströmung, so daß sich nicht die gewünschte, schnelle Abkühlung ergibt. Außerdem wird bei dieser Vorspannstrecke nicht berücksichtigt, daß· außer der gewünschten Erzeugung eines Aufstaudruckpolsters im Stabbereich auch eine Verringerung des Wärmeübergangs gerade durch diese Stäbe erfolgt. Ed müssen deshalb erheblich höhere Strömungsantriebsenergien eingesetzt werden, um den gewünschten Wärmeübergang zu erzielen. Solange mit einer solchen Spannstrecke nur relativ dicke Glasscheiben behandelt werden sollen, fällt dieser Nachteil nicht zu sehr ins Gewicht; wenn jedoch auch dünne Glasscheiben, beispielsweise Glasscheiben für Seitenfenster von Kraftfahrzeugen, die eine Diche von nur 3 mm haben, vorgespannt werden sollen, läßt sich dies nur durch wesentliche Erhöhung der Luftgeschwindigkeit erreichen. Mit der Geschwindigkeit steigt jedoch auch der auf des Scheibe erzeugte Druck quadratisch an, der insbesondere bei dünnen Scheiben eine Verformung der Oberfläche und eine nicht zu tolerierende Verschlechterung der optischen Qualität zur Folge hat.

Zur Vermeidung diese Nachteils werden in der dem Verformungsbereich nachgeschalteten Vorspannstrecke zwischen den gewölbten Formstäben unter der Glasscheibe Düsen und auf der Oberseite der Glasscheibe, genau gegenüber den Düsen auf der Unterseite, weitere, der Scheibenkontur angepaßte Düsenrippen angeordnet. Zur Erhöhung des Druckniveaus oberhalb der Glasscheibe ohne Erzeugung zusätzlicher, den Wärmeübergang nachteilig beeinflußender Stauzonen sind in den Rückströmbereichen zwischen den oberen Düsenrippen Drosseln eingebaut; diese Drosseln verhindern einerseits ein Aufschwimmen der Glasscheiben infolge einer Erhöhung des unteren Überdrucks und können sogar eine geringfügige Anpreßung der Glasscheiben bewirken.

Durch geeignete Wahl der Lochdurchmesser und der Lochteilung der oberen und unteren Düsenrippen läßt sich trotz ungleicher Strömungssituation der gleiche Wärmeübergang an der Ober- und Unterseite der Glasscheibe gewährleisten.

Als Alternative zu dieser Ausführungsform können die gewölbten Formstäbe in das untere Beblasungssystem integriert sein, wobei die Gasströmung unter Ausnützung des Coanda-Effektes längs der Transportstäbe geführt und tangential auf die gewölbte Glasscheibe gerichtet wird. Damit können die bei den üblichen Vorspannstrecken das Beblasungssystem störenden Transport- oder Formstäbe zur Strömungsführung herangezogen werden und dadurch die Wirkung des Gasstroms in Richtung einer schnellen Abkühlung verbessern.

Die Erfindung wird im folgenden anhand von Ausführungsbeispielen unter Bezugnahme auf die beiliegenden, schematischen Zeichnungen näher erläutert. Es zeigen

Fig. 1 einen Längsschnitt durch den Verformungsbereich, wobei sich die geraden Transportstäbe in der Transportstellung befinden,

Fig. 2 einen Längsschnitt durch den Verformungsbereich, wobei die geraden Transportstäbe nach unten in die Verformungsstellung abgesenkt sind,

Fig. 3 einen Querschnitt durch den Verformungsbereich,

Fig. 4 eine erste Ausführungsform einer dem Verformungsbereich nachgeschalteten Vorspannstrecke,

Fig. 5 eine zweite Ausführungsform einer dem Verformungsbereich nachgeschalteten Vorspannstrecke, und

Fig. 6 eine perspektivische Ansicht einer Modifikation der Ausführungsform nach Fig. 5.

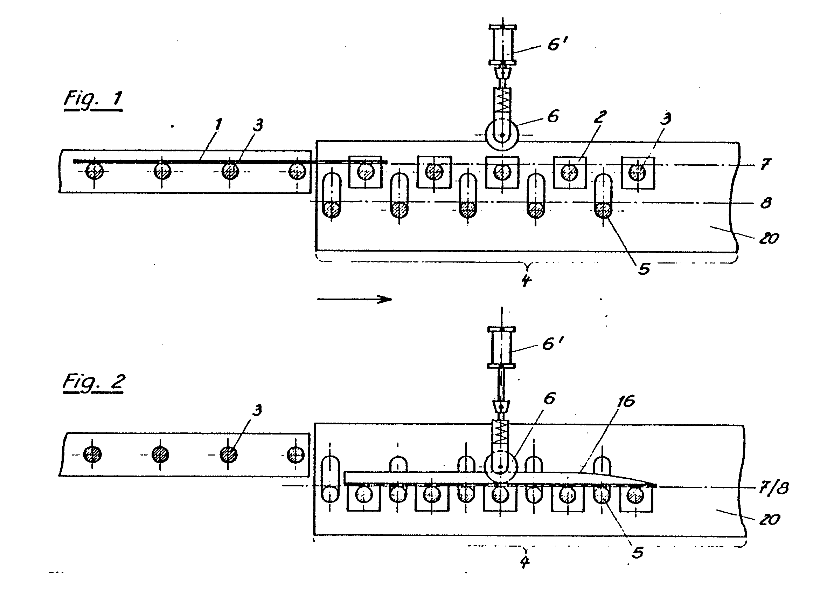

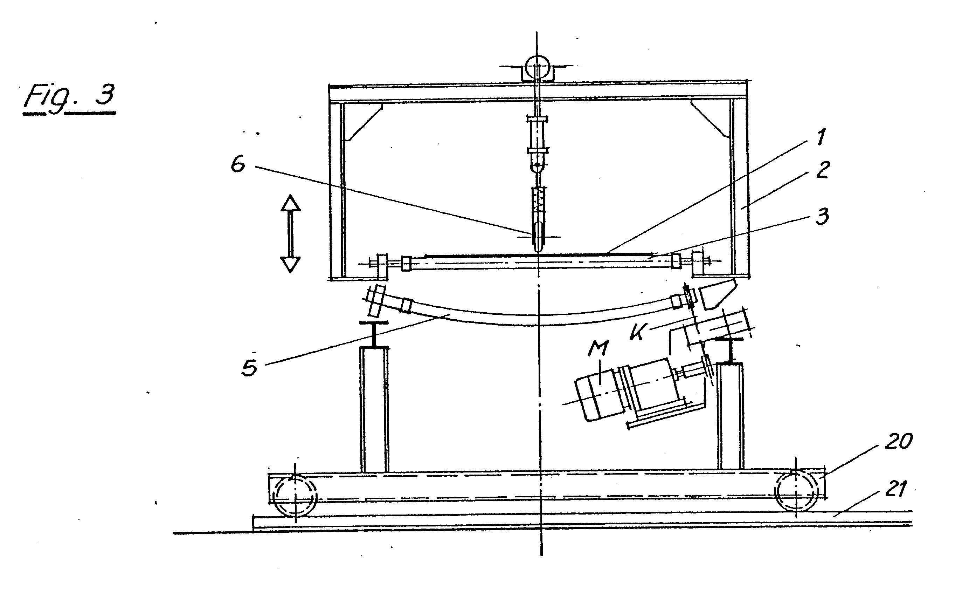

Wie man in Figur 1 erkennen kann, wird eine plane, von einem nicht dargestellten Ofen auf die Erweichungstemperatur erwärmte Glasscheibe 1 von geraden Transportstäben 3, die insgesamt einen Rollengang 2 bilden, zu dem eigentlichen Verformungsbereich 4 transportiert. Auch im Verformungsbereich 4 sind gerade Transportstäbe 3 angeordnet; zwischen zwei benachbarten Transportstäben 3 sind jeweils gewölbte Formstäbe 5 angeordnet (s. Figur 3); diese entsprechend der angestrebten Wölbung der Glasscheibe 11 gewölbten Formstäbe 5 befinden sich unter den geraden Transportstäben 2, wie man ihrer schematisch angedeuteten Scheitellinie 8 entnehmen kann.

Sobalf die Glasscheibe 1 vollständig in den Verformungsbereich 4 transportiert worden ist, senkt sich von oben eine Andruckrolle 6 auf die Oberseite der Glasscheibe 1; diese Andruckrolle 6 wird durch einen Andruckzylinder 6' beaufschlagt, der zur Erzeugung einer genau definierten Anpreßkraft dient.

Die Andruckrolle 6 und der Andruckzylinder 6' sind in einem galgenförmigen Gestell 2 gelagert, das fest mit der Halterung für die Transportstäbe 3 im Verformungsbereich 4 verbunden ist. Das Gestell 2 und damit auch die Andruckrolle 6 einerseits sowie die geraden Transportstäbe 3 im Verformungsbereich 4 andererseits können gemeinsam senkrecht nach unten verschoben werden.

Sobal die frei drehbare, in Transportrichtung der Glasscheibe 1 ausgerichtete Andruckrolle 6 die Oberseite der Glasscheibe 1 berührt, die sich vollständig im Verformungsbereich 4 befindet, werden die Andruckrolle 6 und die geraden Transportstäbe 3 im Verformungsbereich 4 soweit angesenkt, daß die obere Kontaktebene 7 der geraden Transportrollen 3 mit der unteren Scheitellinie 8 der gewölbten Formstäbe 5 zusammenfällt. Da sich die Andruckrolle 6 genau über einem geraden Transportstab 3 befindet, wird hierbei keinerlei Biegemoment übertragen.

Während diese gesamten Vorgangs wird die Glasscheibe 1 weiter in Richtung des Pfeils durch den Verformungsbereich 4 transportiert, wodurch die Glasscheibe 1 im Verlaufe dieses Transportes durch das Zusammenwirken von Andruckrolle 6 und gewölbten Formstangen 5 die gewünschte Wölbung erhält.

Die gewölbten Formstäbe 5 sind fest in einem Gestell 20 montiert, das durch seitliches Herausfahren auf Schienen 21 ausgewechselt werden kann. Eine solche Auswechslung ist beispielsweise dann erforderlich, wenn Glasscheiben mit anderen Wölbungen hergestellt werden sollen, da die Wölbung der senkrecht nach unten gerichteten, gewölbten Formstäbe jeweils der angestrebten Wölbung der Glasscheibe angepaßt ist.

Die Transportstäbe 3 und die Formstäbe 5 haben den üblichen Aufbau, bestehen also aus einem Kern, der mit einer drehbaren, angetriebenen Außenhülle umgeben ist; diese Außenhülle kann beispielsweise durch eine entsprechend geformte Hülse oder aber mehrere Ringe gebildet werden, die auf dn Kern aufgeschoben sind.

In Figur 3 ist schematisch der Antrieb eines gewölbten Formstabes 5 von einem Elektromotor M über eine Kette K angedeutet.

Die gewölbte Glasscheibe 16 wird durch die Drehung der Außenhüllen der gewölbten Formstäbe 5 aus dem Verformungsbereich 4 heraustransportiert und gelangt zu der noch zu erläuternden Vorspannstrecke. Anschließend werden die geraden Transportstäße 3 im Verformungsbereich durch nicht dargestellte Preßluftzylinder weider nach oben in die Transportstellung (s. Figur 1) gebracht, so daß nun die nächste Glasscheibe 1 in den Verformungsbereich 4 gelangen kann.

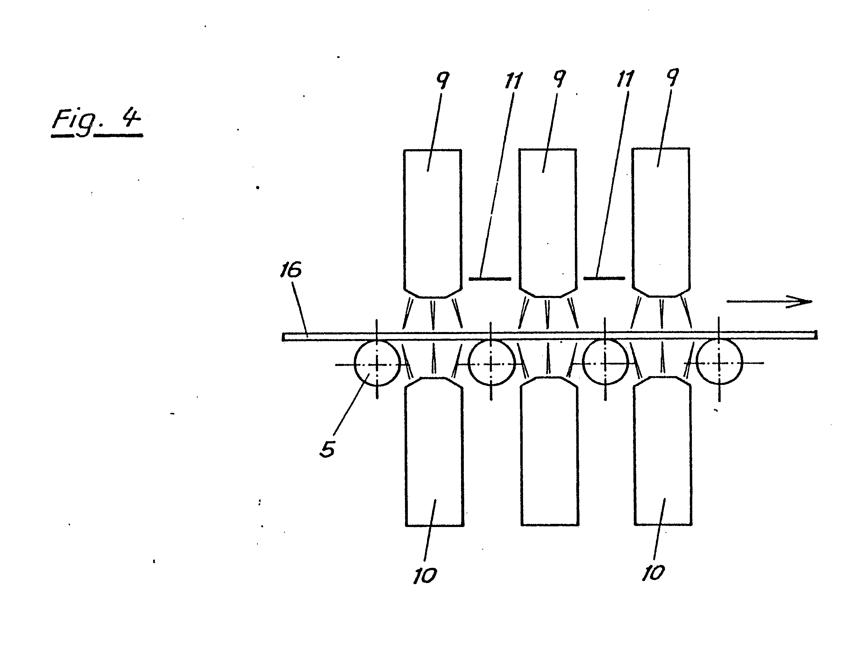

Figur 4 zeigt einen Ausschnitt durch die dem Verformungsbereich 4 nachgeschaltete Vorspannstrecke. Die gewölbte Glasscheibe 16 wird durch gewölbte Formstäbe 5, die hier als Transportmittel dienen, durch die Vorspannstrecke geführt. In den Zwischenräumen zwischen den gewölbten Formstäben 5 sind unter der gewölbten Glasscheibe 16 Düsenrippen 10 angeordnet. Genau gegenüber diesen unteren Düsenrippen 10 befinden sich oberhalb der gewölbten Glasscheibe 16, die die Vorspannstrecke in Richtung des Pfeils durchläuft, ähnliche, obere Düsenrippen 9. Die Düsenrippen 9 und 10 sind der Form der Scheibenkontur angepaßt und richten Luftstrahlen auf die Glasscheibe, die sowohl senkrecht als auch schräg auf die Glasscheibe 16 auftreffen.

Zur Erhöhung des Druckniveaus oberhalb der Glasscheibe 16 ohne Erzeugung zusätzlicher, den Wärmeübergang nachteilig beeinflußender Stauzonen sind in den Rückströmbereichen zwischen den oberen Düsenrippen 9 Drosseln 11 eingebaut; diese Drosseln verhindern einerseits ein Aufschwimmen der Glasscheiben 16 infolge einer Erhöhung des Überdrucks unter der Glasscheibe 16; außerdem läßt sich dadurch eine geringfügige Anpressung der Glasscheiben 16 von oben her auf die gewölbten Formstäbe 5 erreichen.

Durch entsprechende Wahl der Durchmesser und der Teilung der Löcher lassen sich die oberen Düsenrippen 9 derart auf die unteren Düsenrippen 10 abstimmen, daß trotz ungleicher Strömungssituation auf der Oberseite der Glasscheibe 16 der gleiche Wärmeübergang wie auf der Unterseite gewährleistet ist.

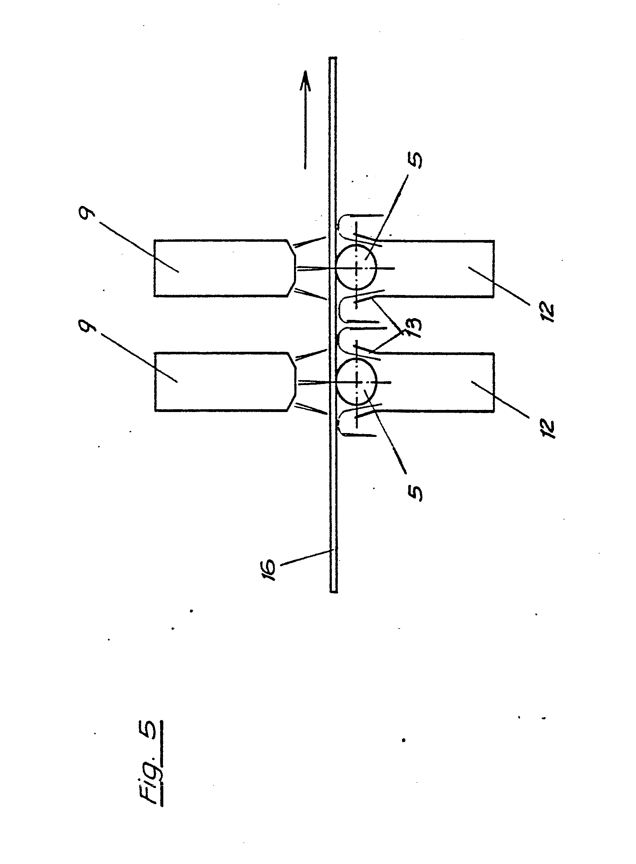

Figur 5 zeigt eine weitere Ausführungsform einer Vorspannstrecke; dabei sind die gewölbten Formstäbe 5 in das untere Beblaseungsytem integriert, also in das Beblasungssystem, das sich unter der Glasscheibe 16 befindet. In Figure 5 ist schematisch angedeutet, daß die Gasströmung unter Ausnutzung des Coanda-Effektes an den im Querschnitt kreisförmigen, gewölbten Formstäben 5 entlang verläuft und die gewölbte Glasscheibe 16 tangential beaufschlagt, wie es für die Erzielung eines guten Wärmeübergangs wichtig ist. Die Gasstrahlen treffen also nicht direkt auf die Scheibenoberfläche auf, was unter Berücksichtigung der optischen Eigenschaften der gewölbten Glasscheiben 16 wesentlich ist.

Bei dieser Ausführungsform sind die oberen Düsenrippen 9 genau oberhalb der Mittellinie der gewölbten Formstäbe 5 angeordnet, so daß durch die Strömungskraft kein Biegemoment auf die gewölbte Glasscheibe ausgeübt wird.

Die Integration der gewölbten Formstäbe 5 in den Düsenherd kann beispielsweise dadurch erfolgen, daß schlitzförmige Strahlen von beiden Seiten her die Formstäbe 5 umschließen.

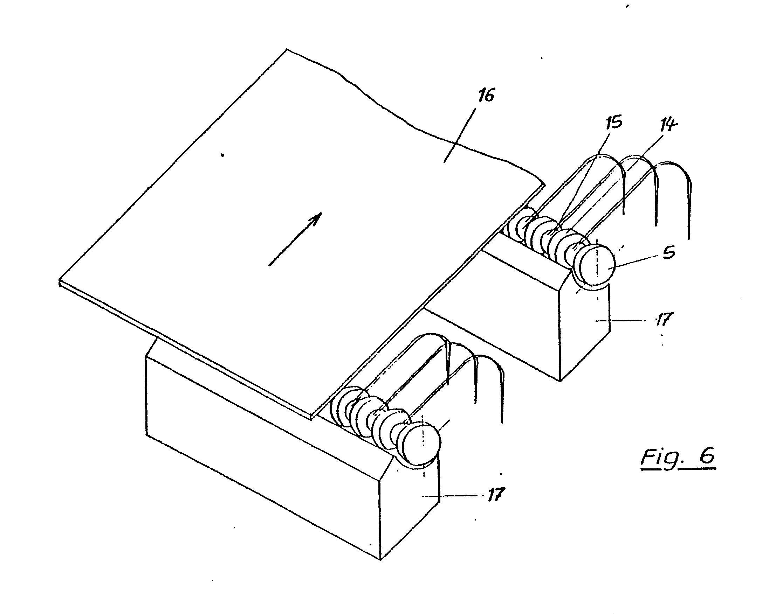

Als Alternative hierzu können die drehbaren Außenhüllen der Formstäbe 5 durch Ringe 14 gebildet werden, wie in Figur 6 dargestellt ist. Zwischen diesen Ringen 14 bilden sich gebogene Ringkanäle 15; aus den unter den Formstäben 5 angeordneten Versorgungsdüsen 17 wird Luft ausgeblasen und zwar entweder durch alle Ringkanäle 15 eines jeden Formstabes 5 in gleicher Richtung oder für verschiedene Ringkanäle 15 jedes Formstabes 5 in unterschiedlicher Richtung. Im Kontaktbereich zwischen der Glasscheibe 16 und dem Formstab 15 wird diese Luftströmung mit hoher Geschwindigkeit an der Glasscheibe 16 vorbei geführt und bewirkt dabei den erforderlichen guten Wärmeübergang.

Wesentlich für die Verformung der Glasscheiben und die Vorspannung ist, daß die Transportgeschwindigkeit der Glasscheibe 1 bzw. 16 beim Verlassen des Ofens höher ist als im Ofen selbst, so daß die Glasscheibe 1 insbesondere den Verformungsbereich 4 mit erhöhter Geschwindigkeit durchläuft und dadurch weniger Zeit für das "Einsinken" in die Zwischenräume zwischen den Formstäben 5 bzw. den Transportstäben 3 zur Verfügung steht; dadurch lassen sich die wellenförmigen Verzerrungen der Oberfläche der Glasscheibe vermeiden.

**Patentansprüche**

1. Vorrichtung zum Wölben von auf die Erweichungstemperatur erwärmten Glasscheiben (1)

a) mit mehreren, eine horizontale Fläche bildenden Transportstäben (3) für die plane Glasscheibe,

b) mit mehreren, entsprechend der Form der gewölbten Glasscheibe gewölbten Formstäben (5) in einem Verformungsberich, und

c) mit einer die Glasscheibe gegen die Formstäbe drückenden Anpressvorrichtung (6, 6'),

d) wobei die Transport- und Formstäbe einen Kern und eine drehbare, angetriebene Außenhülle aufweisen,

gekennzeichnet durch die folgenden Merkmale:

e) die geraden Transportstäbe (3) sind im Verformungsbereich (4) vertikal zwischen der oberen Transportstellung und der unteren Verformungsstellung beweglich;

f) die stationären, senkrecht nach unten gewölbten Formstäbe (5) befinden sich auf der Höhe der Verformungsstellung der Transportstäbe (3);

g) die als Anpressvorrichtung dienende Andruckrolle (6) ist über einem geraden Transportstab (3) angeordnet; und

h) die Andruckrolle (6) ist an einem Stellglied angebracht so daß die Andruckrolle vor dem Absenken der Transportstäbe (3) auf die plane Glasscheibe (1) aufgesetzt und zusammen mit den Transportstäben (3) nach unten in die Verformungsstellung bewegt werden kann.

2. Vorrichtung nach Anspruch 1, dadurch gekennzeichnet, daß als Stellglied ein Andruckzylinder (6') dient, und daß die Andruckrolle (6) senkrecht in Transportrichtung der Glasscheibe (1) angeordnet ist.

3. Vorrichtung nach Anspruch 2, dadurch gekennzeichnet, daß die von dem Andruckzylinder (6) erzeugte Andruckkraft einstellbar ist.

4. Vorrichtung nach einem der Ansprüche 1 bis 3, dadurch gekennzeichnet, daß die Andruckrolle (6) vor dem Durchlaufen der hinteren Kante der Glasscheibe (1) angehoben werden kann.

5. Vorrichtung nach einem der Ansprüche 2 bis 4, dadurch gekennzeichnet, daß der Andruckzylinder (6') mit der Andruckrolle (6) durch ein vertikal bewegliches, galgenförmiges Gestell (2) gehalten ist.

6. Vorrichtung nach mindestens einem der Ansprüche 1 bis 5, dadurch gekennzeichnet, daß die Andruckrolle (6) frei drehbar ist.

7. Vorrichtung nach mindestens einem der Ansprüche 1 bis 5, dadurch gekennzeichnet, daß die Andruckrolle (6) entsprechend der Transportgeschwindigkeit der Glasscheibe (1) drehbar angetrieben ist.

8. Vorrichtung nach mindestens einem der Ansprüche 1 bis 7, dadurch gekennzeichnet, daß in der Verformungsstellung die obere Tangentialebene (7) der Transportstäbe (3) mit der Scheitellinie (8) der gewölbten Formstäbe (5) zusammenfällt.

9. Vorrichtung nach mindestens einem der Ansprüche 1 bis 8, dadurch gekennzeichnet, daß im Verformungsbereich (4) abwechselnd Transportstäbe (3) und Formstäbe (5) angeordnet sind.

10. Vorrichtung nach mindestens einem der Ansprüche 1 bis 9, dadurch gekennzeichnet, daß in Transportrichtung hinter dem Verformungsbereich (4) zwischen den gewölbten Formstäben (5) der Form der gewölbten Glasscheibe (16) angepaßte Düsenrippen (10) angeordnet sind, aus denen Gasstrahlen sowohl senkrecht als auch schräg auf die gewölbte Glasscheibe (16) auftreffen.

11. Vorrichtung nach mindestens einem der Ansprüche 1 bis 9, dadurch gekennzeichnet, daß in Transportrichtung hinter dem Verformungsbereich (4) die gewölbten Formstäbe (5) in Düsenrippen (12) integriert sind, aus denen ein Gasstrom unter Ausnutzung des Coanda-Effektes an der Außenfläche der Formstäbe (5) entlang gegen die gewölbte Glasscheibe (16) geführt wird.

12. Vorrichtung nach Anspruch 11, dadurch gekennzeichnet, daß die Außenhülle der Formstäbe (5) durch mehrere, axial hintereinander angeordnete Ringe (14) gebildet wird, wobei die Gasstrahlen durch die Zwischenräume (15) zwischen den Ringen (14) strömen.

13. Vorrichtung nach mindestens einem der Ansprüche 10 bis 12, dadurch gekennzeichnet, daß über der gewölbten Glasscheibe (16) gegenüber den unteren Düsenrippen (10, 12) weitere, der Form der Glasscheibe angepaßte Düsenrippen (9) angeordnet sind.

14. Vorrichtung nach Anspruch 13, dadurch gekennzeichnet, daß zwischen den Düsenrippen (9) über der gewölbten Glasscheibe (16) Drosseleinrichtungen (11) vorgesehen sind.

15. Vorrichtung nach mindestens einem der Ansprüche 1 bis 14, dadurch gekennzeichnet, daß die Transportgeschwindigkeit der Glasscheibe (1) beim Verlassen des Ofens und im Verformungsbereich (4) höher als die Transportgeschwindigkeit im Ofen ist.

**Revendications**

1. Dispositif pour le cintrage de plaques de verre (1) chauffées à la température de ramollissement,

a) avec une pluralité de barres de transport (3) formant une surface horizontale pour la plaque de verre plane,

b) avec une pluralité de barres de cintrage (5) dans une section de déformation courbées suivant la forme de la plaque de verre cintrée, et

c) avec un dispositif de pression (6, 6') appliquant la plaque de verre contre les barres de cintrage,

d) les barres de transport et de cintrage comprenant un noyau et une enveloppe extérieure tournante entraînée,

par les caractéristiques suivantes:

e) les barres de transport rectilignes (3) peuvent être déplacées verticalement dans la section de déformation (4), entre la position de transport supérieure et la position de déformation inférieure;

f) les barres de cintrage (5) stationnaires et courbées verticalement vers le bas se trouvent au niveau de la position de déformation des barres de transport (3);

g) le rouleau de pression (6) servant de dispositif de pression est disposé au-dessus d'une barre de transport rectiligne (3), et

h) le rouleau de pression (6) est monté sur un organe de réglage de telle façon que le rouleau de pression peut être mis en contact avec la plaque de verre plane (1) avant la descente des barres de transport (3) et déplacé vers le bas dans la position de déformation, conjointement avec les barres de transport (3).

2. Dispositif selon la revendication 1, caractérisé en ce que l'organe de réglage est constitué par un vérin (6') et que le rouleau de pression (6) est disposé verticalement dans la direction de transport de la plaque de verre (1).

3. Dispositif selon la revendication 2, caractérisé en ce que la force de pression produite par le vérin (6') est réglable.

4. Dispositif selon l'une quelconque des revendications 1 à 3, caractérisé en ce que le rouleau de pression (6) peut être soulevé avant le passage du bord postérieur de la plaque de verre (1).

5. Dispositif selon l'une quelconque des revendications 2 à 4, caractérisé en ce que le vérin (6') avec le rouleau de pression (6) est maintenu par un châssis (2) en forme de potence mobile dans le sens vertical.

6. Dispositif selon l'une quelconque des revendications 1 à 5, caractérisé en ce que le rouleau de pression (6) peut tourner librement.

7. Dispositif selon l'une quelconque des revendications 1 à 5, caractérisé en ce que le rouleau de pression (6) est entraîné en rotation conformément à la vitesse de transport de la plaque de verre (1).

8. Dispositif selon l'une quelconque des revendications 1 à 7, caractérisé en ce que, dans la position de déformation, le plan tangentiel supérieur (7) des barres de transport (3) coïncide avec la lignes des sommets (8) des barres de cintrage courbes (5).

9. Dispositif selon l'une quelconque des revendications 1 à 8, caractérisé en ce que dans la section de déformation (4) sont disposées alternativement des barres de transport (3) et des barres de cintrage (5).

10. Dispositif selon l'une quelconque des revendications 1 à 9, caractérisé en ce que, dans la direction de transport en aval de la section de déformation (4), sont disposées, entre les barres de cintrage courbes (5), des nervures à tuyères (10) adaptées à la forme de la plaque de verre cintrée (16) et fournissant des jets de gaz orientés aussi bien perpendiculairement qu'en oblique vers la plaque de verre cintrée (16).

11. Dispositif selon l'une quelconque des revendications 1 à 9, caractérisé en ce que, dans la direction de transport en aval de la section de déformation (4), les barres de cintrage courbes (5) sont intégrées dans des nervures à tuyères (12) à partir desquelles un courant de gaz est dirigé, avec utilisation de l'effet Coanda, le long de la surface extérieures des barres de cintrage (5), vers la plaque de verre cintrée (16).

12. Dispositif selon la revendication 11, caractérisé en ce qùe l'enveloppe extérieure des barres de cintrage (5) est constituée par une pluralité de bagues (14) disposées en série dans le sens axial, les jets de gaz sortant par les interstices (15) entre les bagues (14).

13. Dispositif selon l'une quelconque des revendications 10 à 12, caractérisé en ce que des nervures à tuyères (9) supplémentaires adaptées à la forme de la plaque de verre sont disposées au-dessus de la plaque de verre cintrée (16), en face de nervures à tuyéres inférieures (10, 12).

14. Dispositif selon la revendication 13, caractérisé en ce que des dispositifs d'étranglement (11) sont prévus entre les nervures à tuyères (9), au-dessus de la plaque de verre cintrée (16).

15. Dispositif selon l'une quelconques des revendications 1 à 14, caractérisé en ce que la vitesse de transport de la plaque de verre (1) à la sortie du four et dans la section de déformation (4) est plus grande que la vitesse de transport dans le four.

## Claims

1. An apparatus for curving glass panes (1) heated to softening temperature

a) having a plurality of conveyor rods (3) forming a horizontal surface for the plane glass pane,

b) having a plurality of shaped rods (5), curved in accordance with the shape of the curve glass pane, in a deformation region, and

c) having a pressure device (6, 6') urging the glass pane towards the shaped rods;

d) wherein the conveyor and shaped rods comprise a core and a rotatable, driven outer casing, characterised by the following features:

e) the straight conveyor rods (3) are movable vertically, in the deformation region (4), between the upper conveying position and the lower deformation position;

f) the stationary shaped rods (5) which are curved vertically downwards are at the height of the deformation position of the conveyor rods (3);

g) the pressure roller (6) serving as a pressure device is situated above a straight conveyor rod (3); and

h) the pressure roller (6) is mounted on an adjusting member so that the pressure roller can be placed on the plane glass pane (1) before the conveyor rods (3) are lowered and can be moved down into the deformation position together with the conveyor rods (3).

2. An apparatus as claimed in Claim 1, characterised in that a pressure cylinder (6') serves as an adjusting member and that the pressure roller (6) is arranged perpendicularly in the conveying direction of the glass pane (1).

3. An apparatus as claimed in Claim 2, characterised in that the pressing force produced by the pressure cylinder (6) is adjustable.

4. An apparatus as claimed in claims 1 to 3, characterised in that the pressure roller (6) can be lifted before the rear edge of the glass pane (1) passes through.

5. An apparatus as claimed in one of the Claims 2 to 4, characterised in that the pressure cylinder (6') with the pressure roller (6) is held by a vertically movable, gallows-shaped frame (2).

6. An apparatus as claimed in at least one of the Claims 1 to 5, characterised in that the pressure roller (6) is freely rotatable.

7. An apparatus as claimed in at least one of the Claims 1 to 5, characterised in that the pressure roller (6) is driven in rotation in accordance with the conveying speed of the glass pane (1).

8. An apparatus as claimed in at least one of the Claims 1 to 7, characterised in that, in the deformation position, the upper tangential plane (7) of the conveyor rods (3) coincides with the apex line (8) of the curved shaped rods (5).

9. An apparatus as claimed in at least one of the Claims 1 to 8, characterised in that conveyor rods (3) and shaped rods (5) are arranged alternatively in the deformation region (4).

10. An apparatus as claimed in at least one of the Claims 1 to 9, characterised in that arranged between the curved shaped rods (5), behind the deformation region (4) in the conveying direction are nozzle ribs (10) which are adapted to the shape of the curved glass pane (16) and from which jets of gas impinge on the curved glass pane (16) both vertically and obliquely.

11. An apparatus as claimed in at least one of the Claims 1 to 9, characterised in that, behind the deformation region (4) in the conveying direction, the curved shaped rods (5) are integrated in nozzle ribs (12) from which a stream of gas is guided towards the curved glass pane (16) using the Coanda effect along the outer surface of the shaped rods (5).

12. An apparatus as claimed in Claim 11, characterised in that the outer casing of the shaped rods (5) is formed by a plurality of rings (14) arranged coaxially one behind the other, and the jets of gas flow through the gaps (15) between the rings (14).

13. An apparatus as claimed in at least one of the Claims 10 to 12, characterised in that further nozzle ribs (9) adapted to the shape of the glass pane are arranged above the curved glass pane (16) opposite the lower nozzle ribs (10, 12).

14. An apparatus as claimed in Claim 13, characterised in that throttle devices (11) are provided between the nozzle ribs (9) above the curved glass pane (16).

15. An apparatus as claimed in at least one of the Claims 1 to 14, characterised in that the conveying speed of the glass pane (1) on leaving the furnace and in the deforming region (4) is higher than the conveying speed in the furnace.

Fig. 1

Fig. 2

0 114 168

Fig. 3

## Fig. 4

9 11 9 11 9

16

5

10 10

0 114 168

Fig. 5

Fig. 6